# EUROPEAN PATENT APPLICATION

(11) **EP 1 179 518 A1**
(43) Date of publication of application: **13.02.2002**
(21) Application number: 00985840.8
(22) Date of filing: 22.12.2000
(51) Int. Cl.: C04B 35/66

(54) **CARBON-CONTAINING AQUEOUS MONOLITHIC REFRACTORY**

(30) Priority: 24.12.1999 JP 36743699; 06.01.2000 JP 2000000561
(71) Applicant: SHINAGAWA REFRACTORIES CO., LTD., Tokyo 102-0073 (JP)
(72) Inventor: SUMIMURA, Hisaki, c/oShinagawa Refractories Co Ltd, Chiyoda-ku, Tokyo 102-0073 (JP); NAMBA, Makoto, c/o Shinagawa Refractories Co Ltd, Chiyoda-ku, Tokyo 102-0073 (JP); ENOKI, Kiyotaka, c/o Shinagawa Refractories Co Ltd, Chiyoda-ku, Tokyo 102-0073 (JP); KOMATSUBARA, Kiyoyuki, Shinagawa Refractories Co, Chiyoda-ku, Tokyo 102-0073 (JP); SUZUKI, Takehiko, c/oShinagawa Refractories Co Ltd, Chiyoda-ku, Tokyo 102-0073 (JP)
(74) Representative: HOFFMANN - EITLE
(86) International application number: JP0009152
(87) International publication number: WO0147832

(57) **Abstract**

An aqueous carbon-containing unshaped refractory comprising a refractory material composed of 50 to 80% by weight of refractory aggregate having a particle diameter of greater than 45 µm and 20 to 50% by weight of fine powder having a particle diameter of 45 µm or less, wherein 15 to 60% by weight of the fine powder is a carbon black material of pH 7 to 9. Also disclosed is an aqueous carbon-containing unshaped refractory comprising 3 to 15% by weight based on the total weight of the refractory of a carbon black material having a specific surface area according to a nitrogen adsorption method of 10 to 30 m²/g. The refractory may contain 0.02 to 0.03% by weight of β-naphthalenesulfonic acid-formaldehyde condensate sodium salt per 1% of the carbon black material. The aqueous carbon-containing unshaped refractory is excellent in corrosion resistance and spalling resistance.

## Description

### TECHNICAL FIELD

The present invention relates to an aqueous carbon-containing unshaped refractory with high corrosion resistance and high spalling resistance, in particular a castable refractory, for use in the lining operation or repairing of vessels for various molten metals such as molten pig iron and molten steel.

### BACKGROUND ART

Unshaped refractories used for vessels for molten metals must have excellent corrosion resistance and excellent structural and thermal spalling resistance. Accordingly, unshaped refractories containing carbon materials and having very low thermal expansion coefficients have been widely used. As carbon materials that are added to unshaped refractories, amorphous graphite, flaky graphite, coke, carbon black, pitch and the like are known. However, these carbon materials are generally hydrophobic and poorly dispersible in water, so that it is difficult to add them in unshaped refractories in large amounts.

To improve this, Japanese Patent Application Laid-open No. Hei 4-12064 discloses surface treated graphite for unshaped refractories that comprises resin surface coated graphite that is further coated with a low foaming, hydrophilic surfactant and unshaped refractories for pretreating molten pig iron comprising 1 to 10% by weight of resin surface coated graphite that is further coated with a low foaming, hydrophilic surfactant, 5 to 30% by weight of silicon carbide, 1 to 20% by weight of agalmatolite and 1 to 10% by weight of binder and balance alumina and/or alumina-silica material. Further, Japanese Patent Application Laid-open No. Hei 5-194044 discloses a graphite-containing unshaped refractory composition mainly composed of graphite material powder and refractory compound powder, in which the graphite material powder is composed of graphite particles and small particles of at least one selected from the group consisting of metal oxides, metal carbides, metal nitrides, metal borides and metals having a mean particle diameter smaller than that of the graphite particles and being hydrophilic, the small particles being fixed to the surface of the graphite particles, the composition containing the graphite material powder in an amount of 2 to 40% by weight in terms of carbon. The graphite materials disclosed in these Laid-open publications are subjected to surface treatment to render them hydrophilic. However, they give no fundamental solution. The pitch material that shows relatively high hydrophilicity among the carbon materials contains a lot of volatile components. As a result, when it is added in large amounts, it does not give rise to a dense, strong refractory structure and generally it is added in small amounts.

On the other hand, Japanese Patent Application Laid-open No. Sho 58-125669 discloses a castable refractory containing carbon black having a mean particle diameter of 200 µm or more that has been subjected to hydrophilic treatment and removal of ultrafine particles having a particle diameter of 100 µm or less. Japanese Patent Application Laid-open No. Hei 7-17773 discloses a certain carbon-containing unshaped refractory that contains 0.1 to 3% by weight of spherical carbon black having a large particle diameter as large as about 0.02 to 0.50 µm and having undeveloped structure and refractory aggregate. This Laid-open publication also discloses the spherical carbon black was one produced by a thermal method such as thermal, medium thermal or fine thermal method.

Japanese Patent Application Laid-open No. Hei 8-259340 discloses magnesia-carbon based castable refractories comprising a blend composed of 66 to 95.7 wt% of magnesia and 2 to 20 wt% of amorphous carbon as major raw materials and 2 to 10 wt% of silicon carbide having a particle diameter of 100 µm or less, 0.1 to 2.0 wt% of boron carbide having a particle diameter of 100 µm or less, and 0.2 to 2.0 wt% of silica flour having a particle size of 5 µm or less, and in addition to the blend 0.1 to 1.0 wt% of basic aluminum lactate and 0.1 to 5.0 wt% of aromatic sulfonic acid formaldehyde condensate ammonium salt based on 100 wt% of the blend. Furthermore, Japanese Patent Application Laid-open No. Hei 8-319170 discloses alumina-carbon based unshaped refractories for molten metals comprising 60% by weight or more of alumina material, 2 to 15% by weight of carbon material composed of nonvolatile amorphous carbon powder, 2 to 15% by weight of alumina intermediate composed mainly of η-, δ-, χ-, and γ-alumina, 2 to 8% by weight of silicon carbide powder, and 0.1 to 2.0% by weight of boron carbide powder. These publications disclose materials that contain large amounts of carbon black as amorphous carbon. However, the study by the present inventors demonstrated that no aqueous unshaped refractory could be realized by use of normal carbon black.

Further, Japanese Patent Application Laid-open No. Hei 10-36177 discloses a blast furnace taphole mix comprising 100 parts by weight of powder component composed of 5 to 25% by weight of a carbon material other than a carbon black material, 5 to 50% by weight of silicon carbide, 10 to 45% by weight of silicon nitride, 2 to 15% by weight of a carbon black material having a dibutyl phthalate (DBP) adsorption of 100 ml/100 g or less, and 15 to 75% by weight of a refractory material, and 10 to 25 parts by weight of a carbon-containing binder. This blast furnace taphole mix is a so-called non-aqueous unshaped refractory, which is quite different from an aqueous unshaped refractory, i.e., an unshaped refractory kneaded with water.

On the other hand, pitch material, which is relatively hydrophilic among the carbon materials, contains much volatile material so that when it is added in large amounts, it cannot give rise to dense and strong refractory structure and hence generally it is added in small amounts.

### DISCLOSURE OF THE INVENTION

As stated above, it has been conventionally very difficult to add a large amount of a carbon material to aqueous unshaped refractories like castable refractories and no carbon-containing aqueous refractories with high durability have been realized yet.

Therefore, an object of the present invention is to provide a carbon-containing aqueous unshaped refractory with excellent corrosion resistance.

Another object of the present invention is to provide an aqueous carbon-containing refractory with excellent spalling resistance that can overcome the problems and defects of the prior art.

More particularly, the present invention is intended to provide an aqueous carbon-containing unshaped refractory that can contain a carbon material in an amount larger than conventional refractories of this type, has dense and strong refractory structure and is excellent in durability and spalling resistance. Also, the present invention is intended to provide an aqueous carbon-containing unshaped refractory that can be used as a castable refractory for casting operations or wet spraying operations.

The inventors of the present invention have extensively studied the properties of aqueous carbon-containing unshaped refractories and the surface chemical properties of the carbon black to be added thereto and as a result they have found that carbon black of the specified pH has hydrophilicity similar to that of the refractory material fine powder and replacement of normal refractory material by such specified carbon black did not result in loss of fluidity at all. Also, they have found that because of this property, use of the carbon black of the specified pH as the fine powder for a carbon-containing aqueous refractory afforded a dense refractory structure to drastically improve corrosion resistance.

Further, the inventors of the present invention have found that aqueous carbon-containing unshaped refractories containing carbon black having the specified specific surface area are much superior in fluidity to unshaped refractories containing other types of carbon black so that the carbon black can be added in large amounts to considerably improve the spalling resistance of unshaped refractories. The present invention has been made based on this finding.

That is, according to a first aspect of the present invention, there is provided an aqueous carbon-containing unshaped refractory, comprising a refractory material composed of 50 to 80% by weight of refractory aggregate having a particle diameter of greater than 45 µm and 20 to 50% by weight of fine powder having a particle diameter of 45 µm or less, characterized in that 15 to 60% by weight of the fine powder is a carbon black material of pH 7 to 9.

Further, according to a second aspect of the present invention, the aqueous carbon-containing unshaped refractory is characterized in that the carbon black material contains 1.5% by weight or less of a volatile component.

Still further, according to a third aspect of the present invention, there is provided an aqueous carbon-containing unshaped refractory, characterized by comprising 3 to 15% by weight based on the total weight of the refractory of a carbon black material having a specific surface area according to a nitrogen adsorption method of 10 to 30 m²/g.

Yet further, according to a fourth aspect of the present invention, the aqueous carbon-containing unshaped refractory is characterized by further comprising 0.02 to 0.03% by weight of β-naphthalenesulfonic acid-formaldehyde condensate sodium salt per 1% of the carbon black material.

Furthermore, according to a fifth aspect of the present invention, the aqueous carbon-containing unshaped refractory is characterized in that ultrafine powder having a particle diameter of 10 µm or less occupies 2 to 15% by weight of the remainder of the refractory except for the carbon black material and the β-naphthalenesulfonic acid-formaldehyde condensate sodium salt.

Moreover, according to a sixth aspect of the present invention, the aqueous carbon-containing unshaped refractory is characterized in that the refractory has an apparent porosity after drying of 13.0% or less.

### BEST MODE FOR CARRYING OUT THE INVENTION

A first aqueous carbon-containing unshaped refractory according to the present invention is featured by use of a carbon black material having a pH of 7 to 9 as a portion of fine powder having a particle diameter of 45 µm or less that constitutes the refractory material.

Incidentally, conventional carbon black is produced by a variety of methods including, for example, oil furnace methods, lamp black methods, channel methods, and gas furnace methods based on the principle of incomplete combustion and acetylene decomposition methods, thermal methods, plasma methods, and partial oxidization thermal decomposition methods based on the principle of thermal decomposition, and the like. The obtained carbon black has various properties. Generally basic properties of carbon black are known to be governed by the following three factors: (1) particle size, (2) structure (state of chain agglomeration of primary particles), and (3) chemical properties. Among these, the chemical properties include chemical composition and surface functional groups. In particular, since the surface functional groups formed on the edge portion of a plane of polycyclic aromatic group layer exposed on the surface of a particle are phenol, quinone, carboxyl, lactone, etc., the groups are very complicated. As a result, little has been clarified yet as to the influence the chemical properties of carbon black might impart to the fluidity of aqueous carbon-containing unshaped refractories and as to the mechanism thereof.

The inventors of the present invention have carried out detailed research on the influence of the chemical properties of the surface of carbon black on the fluidity of an aqueous carbon-containing unshaped refractory and as a result they have found that the pH of carbon black has a great influence on the fluidity of an aqueous carbon-containing unshaped refractory. Currently, various types of carbon black with a pH of 2 to 11, that is, from acidic to alkaline, are commercially available. Among them, carbon black with a pH of 7 to 9 have hydrophilicity equivalent to that of normal refractory fine powder, so that they can be substituted for the fine powder in the refractory material in the aqueous carbon-containing unshaped refractory without any damage to fluidity. Therefore, even when such carbon black is contained in large amounts in an aqueous carbon-containing unshaped refractory, the refractory can be cast with a small amount of water, with the result that refractory cast articles with excellent corrosion resistance can be obtained.

Note that, the pH of the carbon black materials referred to herein is a value determined by adding 100 ml of distilled water to 10 g of a sample of carbon black material, boiling the mixture for 10 minutes, cooling it to room temperature, separating supernatant and measuring the pH of mud-like residue on a glass electrode pH meter.

Further, the volatile content of carbon black is one of the numerical values that indicate the chemical properties thereof. The volatile content of carbon black that is currently commercially available is about 0.3 to about 11.0%. It has already been known in the art that if the volatile content of carbon black added to the aqueous carbon-containing unshaped refractory increases, the denseness of the resultant refractory cast articles is deteriorated as they are heated increasingly and hence an increased volatile content is undesirable. In contrast, the present inventors have found a decreased volatile content of carbon black gives an increased fluidity of aqueous carbon-containing unshaped refractory. The tendency that a decrease in volatile content of carbon black will give a smoother surface of particles of carbon black may influence this phenomenon. However, the mechanism of this discovery is unclear at present.

Note that, the volatile contents of carbon black materials referred to herein were measured as follows.

An electric furnace for measuring volatile content according to JIS-M-8812-4 was kept at 950±10°C and a platinum crucible of an inner volume of 10 ml with an inner lid was baked for 3 to 5 minutes without contents in the furnace. A sample of carbon black material dried at 105±1°C for 1 hour was filled in the crucible until a position was reached such that the resulting layer of the carbon material had a height of about 2 mm from the level mark line for the lid and the filled crucible was weighed exactly. The crucible was heated in the electric furnace for 7 minutes and then cooled to room temperature in a desiccator. Thereafter, the crucible was weighed and the rate of decrease to the sample was expressed in percentage.

The carbon black material used in the aqueous carbon-containing unshaped refractory of the present invention is not particularly limited as to its production history, average particle diameter and the like as long as it has a pH of 7 to 9. However, pH of less than 7 or greater than 9 is not desirable since the fluidity of the resultant aqueous carbon-containing unshaped refractory decreases. A carbon black material having a pH of 7.5 to 8.5 is more preferable.

In the aqueous carbon-containing unshaped refractory of the present invention, the refractory material is constituted by 50 to 80% by weight of refractory aggregate having a particle diameter greater than 45 µm and 20 to 50% by weight of fine powder having a particle diameter of 45 µm or less. The proportion of the refractory aggregate having a particle diameter greater than 45 µm of less than 50% by weight or more than 80% by weight is not preferable since the fluidity of the aqueous carbon-containing unshaped refractory at a low water content is insufficient.

In the aqueous carbon-containing unshaped refractory of the present invention, the carbon black material of pH 7 to 9 occupies 15 to 60% by weight, preferably 15 to 50% by weight of the fine powder having a particle diameter of 45 µm or less. If the blending ratio of the carbon black material in the fine powder is less than 15% by weight, the effect of improving corrosion resistance is insufficient while if it exceeds 60% by weight, the fluidity of the aqueous carbon-containing unshaped refractory decreases, so that neither range is preferable.

Note that when the carbon black material has a pH of 7 to 9 and a volatile content of 1.5% or less, the cast article has a denser refractory structure so that the effect of improving corrosion resistance is greater.

Still further, in a third aspect of the present invention, the inventors of the present invention have found the following facts (A) to (D), to achieve the present invention:
(A) Carbon black having a smaller specific surface area has less fine holes or unevenness on the particle surfaces and less voids between the particles so that when it is added to unshaped refractories, sufficient fluidity can be obtained at low water content and the dispersibility of the carbon black itself is increased.
(B) Addition of carbon black having a specific surface area as specified above and β-naphthalenesulfonic acid-formaldehyde condensate sodium salt in combination in the specified ratio further improves the fluidity of the unshaped refractory.
(C) Addition of carbon black having a specific surface area as specified above and β-naphthalenesulfonic acid-formaldehyde condensate sodium salt in combination in the specified ratio and adjusting the content of ultrafine powder having a particle diameter of 10 µm or less in the balance to 15% by weight or less gives high fluidity to the unshaped refractory at a low water content.
(D) Since carbon-containing castable refractory containing the carbon black having a specific surface area as specified above and having an apparent porosity after drying of 13.0% or less is excellent in oxidation resistance, addition of it results in an increased spalling resistance.

That is, in order to achieve the above objects, the aqueous carbon-containing unshaped refractory is characterized by comprising 3 to 15% by weight based on the total weight of the refractory of a carbon black material having a specific surface area according to a nitrogen adsorption method of 10 to 30 m²/g. Use of such a specified carbon black material is effective in imparting sufficient fluidity at a low water content and increased dispersibility of the carbon black itself.

In addition, the aqueous carbon-containing unshaped refractory is characterized by further comprising 3 to 15% by weight based on the total weight of the refractory of a carbon black material having a specific surface area according to a nitrogen adsorption method of 10 to 30 m²/g and 0.02 to 0.03% by weight of (β-naphthalenesulfonic acid-formaldehyde condensate sodium salt per 1% of the carbon black material. Thus, use of the carbon black material having a specific surface area as specified above and (β-naphthalenesulfonic acid-formaldehyde condensate sodium salt in the specified ratio is effective in further improving the fluidity of the unshaped refractory.

Further, the aqueous carbon-containing unshaped refractory is characterized by comprising 3 to 15% by weight based on the total weight of the refractory of a carbon black material having a specific surface area according to a nitrogen adsorption method of 10 to 30 m²/g and 0.02 to 0.03% by weight of β-naphthalenesulfonic acid-formaldehyde condensate sodium salt per 1% of the carbon black material, in which the content of ultrafine powder in the balance having a particle diameter of 10 µm or less is 2 to 15% by weight. Thus, use of the carbon black material having a specific surface area as specified above and β-naphthalenesulfonic acid-formaldehyde condensate sodium salt in the specified ratio and adjusting the content of ultrafine powder having a particle diameter of 10 µm or less in the balance to 15% by weight or less is effective in imparting high fluidity to the unshaped refractory at a low water content.

In addition, according to the present invention, the aqueous carbon-containing unshaped refractory is characterized by having an apparent porosity after drying of preferably 13.0% or less. Thus, the refractory composition containing carbon black having the specified pH or the specified specific surface area when it has an apparent porosity after drying of 13.0% or less is excellent in oxidation resistance so that it can give rise to a castable refractory having high corrosion resistance and high spalling resistance.

The specific surface area of carbon black is one numerical value that indicates the physical chemical properties of carbon black, and it depends on particle diameter, surface condition of the particles, and particle size distribution.

The specific surface area is divided into "total specific surface area" measured by a nitrogen adsorption method (BET method) and "nonporous specific surface area (specific surface area from which fine pores and voids among particles are excluded)" measured by an electron microscopic method or a CTAB method.

As the fine pore volume of carbon black may reach 30% or more of the total specific surface area, the specific surface area of fine pore volume is not negligible. The neck or voids of aggregate, which is a minimum unit of carbon black, is also included in the total specific surface area. Accordingly, in the present invention, the specific surface area is given by the "total specific surface area" measured by a nitrogen adsorption method (BET method). Currently commercially available carbon black generally has a specific surface area of about 10 to about 350 m²/g by the nitrogen adsorption method.

The aqueous carbon-containing unshaped refractory according to the third to fifth embodiments of the present invention contains carbon black having a specific surface area of 10 to 30 m²/g. If the specific surface area measured by the nitrogen adsorption method exceeds 30 m²/g, the fluidity of the material containing the carbon black decreases considerably and the addition amount of carbon black is limited to a low level, which is not preferable.

Further, the addition amount of carbon black is 3 to 15% by weight, preferably 4 to 10% by weight. If the addition amount of carbon black is less than 3% by weight, the effect of improving spalling resistance by the addition of the carbon material is insufficient while if it exceeds 15% by weight, the packing property of the unshaped refractory decreases to render the structure loose. Neither range is preferable.

In the third to fifth aspects of the present invention, the carbon black material is not particularly limited with respect to its average particle diameter and particle size distribution as far as its specific surface area measured by the nitrogen adsorption method is in the range of 10 to 30 m²/g and optionally selected. Also, if the specific surface area measured by the nitrogen adsorption method is in the above-mentioned range, any raw material may be used. For example, channel black, furnace black, acetylene black and the like may be used.

In the aqueous carbon-containing unshaped refractory according to the fourth and fifth aspects of the present invention, the β-naphthalenesulfonic acid-formaldehyde condensate sodium salt used is intended mainly to serve as a water reducing agent. It is added in a ratio of 0.02 to 0.03% by weight per 1% by weight of the carbon black. If the addition amount is less than 0.02% by weight per 1% by weight of the carbon black, the effect of water reduction is poor while if it exceeds 0.03% by weight per 1% by weight of the carbon black, the packing of the unshaped refractory decreases. Therefore, neither range is preferable.

β-Naphthalenesulfonic acid-formaldehyde condensate ammonium salt and other salts, which are also known as a water reducing agent besides the β-naphthalenesulfonic acid-formaldehyde condensate sodium salt used in the present invention is not preferable since the former has only a poor water reducing effect.

In the fifth aspect of the present invention, ultrafine powder having a particle diameter of 10 µm or less occupies 2 to 15% by weight, preferably 5 to 10% by weight of the remainder of the refractory except for the carbon black material. If the ultrafine powder occupies less than 2% by weight, the fluidity of the material is insufficient while if it occupies more than 15% by weight, the material after kneading with water has undesirably high viscosity to decrease the fluidity. Neither range is preferable.

Examples of the ultrafine powder that can be used in the present invention include known ultrafine powder of refractory material such as alumina, silica, magnesia, spinel, and zirconia.

The aqueous carbon-containing unshaped refractory according to the fourth aspect of the present invention is a castable refractory having an apparent porosity after drying of 13% or less.

An apparent porosity after drying exceeding 13% is not preferable since the oxidation resistance of the unshaped refractory decreases.

The aqueous carbon-containing unshaped refractory of the present invention can be used for steel making furnace i.e., blast furnace trough, molten pig iron ladle, torpedo car, converter, ladle, RH, tundish, etc. and various industrial furnaces. As the refractory aggregate having a particle diameter of greater than 45 µm and fine powder having a particle diameter of 45 µm or less that constitute the refractory material of the aqueous carbon-containing unshaped refractory of the present invention, there can be used one or more materials selected from the group consisting of fused alumina, sintered alumina, calcined alumina, bauxite, alumina shale, cyanite, mullite, agalmatolite, silica, fused spinel, sintered spinel, sintered magnesia, zirconium, zirconia, silicon carbide, silicon iron nitride, silicon, ferrosilicon, aluminum, boron carbide, clay, bentonite, hydrate amorphous silica, and anhydrous amorphous silica.

Further, in the aqueous carbon-containing unshaped refractory of the present invention, a carbon material other than the carbon black material having a pH of 7 to 9, such as graphite and pitch may be used in a blending ratio such that the effect of the present invention is not deteriorated.

In addition, the aqueous carbon-containing unshaped refractory of the present invention may contain, as a binding agent, normal temperature curing binders such as alumina cement and clay and thermal curing binders such as sodium silicate. The blending ratio of the binder is in the range of 0.1 to 20% by weight, preferably 1 to 10% by weight. If the blending ratio of the binder is less than 0.1% by weight, development of strength is insufficient while if it exceeds 20% by weight, the corrosion resistance of the unshaped refractory decreases. Therefore, neither range is preferable.

The aqueous carbon-containing unshaped refractory of the present invention may optionally contain a dispersant used in normal casting materials. As the dispersant, there can be used one or more of phosphoric acid alkali metal salts, carbonic acid alkali metal salts, humic acid alkali metal salts, naphthalenesulfonic acid-formaldehyde condensate salts, sodium polycarbonates and substances that are equivalently effective to those described above. The blending ratio of the dispersant is 0.005 to 2 % by weight, preferably 0.05 to 0.5 % by weight per 100 % by weight of the sum of the refractory material and binder. A dispersant blending ratio of less than 0.005 % by weight is not preferable since no intended effect is obtained. A blending ratio of over 2 % by weight is also not preferable since the corrosion resistance of the unshaped refractory decreases.

Note that the amount of water upon working the aqueous carbon-containing unshaped refractory of the present invention is not particularly limited and the aqueous carbon-containing unshaped refractory of the present invention may be operated at a working water amount in the same range as that used in conventional aqueous carbon-containing unshaped refractories.

### EXAMPLES

Hereinafter, the aqueous system carbon-containing unshaped refractory of the present invention will be described in more detail by examples. However, the present invention is by no means limited to these examples.

### (Examples 1 to 8 and Comparative Examples 1 to 6)

Aqueous carbon-containing unshaped refractories according to the first embodiment of the present invention and of comparison were prepared by blending the components shown in Table 1 in the blending ratios shown in Table 1. The obtained refractories were measured for apparent porosity after drying and corrosion resistance index. Table 1 shows the results.

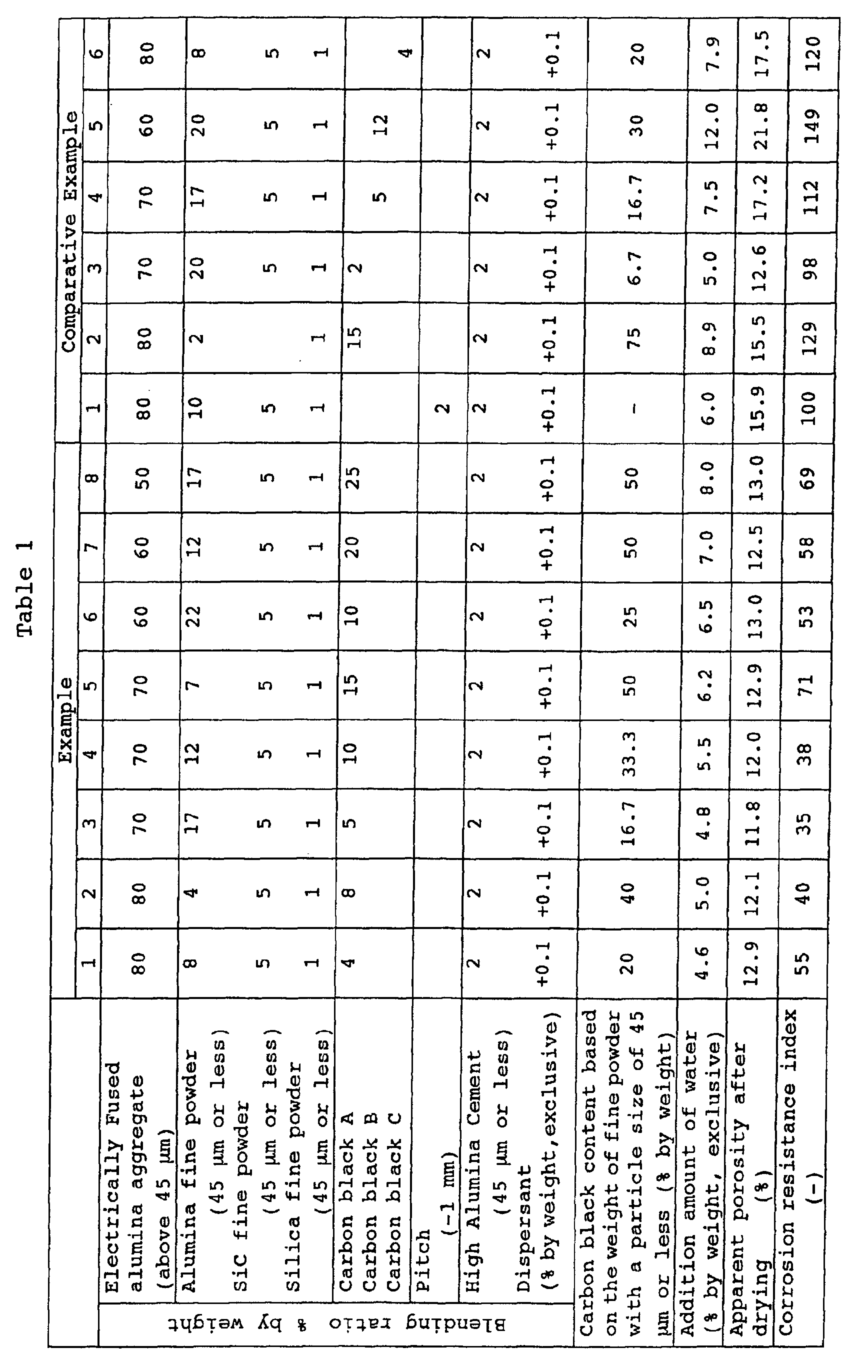

In Table 1 above, carbon black A had a pH of 8 and a volatile content of 1.0% of volatile matter, carbon black B had a pH of 6 and a volatile content of 2.0%, and carbon black C had a pH of 10 and a volatile content of 0.3%.

Apparent porosity after drying was measured according to JIS-R-2205 by drying a cast molded sample (40 mm × 40 mm × 160 mm in shape) at 105°C for 24 hours and then measuring apparent porosity (%).

Further, corrosion resistance index was determined by conducting a rotating drum corrosion test at 1550°C for 5 hours using a corrosion agent of pig iron: blast furnace slag=1:1 and measuring corrosion loss depth. The obtained data were expressed as an index taking the corrosion loss depth of the sample of Comparative Example 1 as 100. Smaller numbers show higher corrosion resistance.

As will be apparent from the results shown in Table 1, the aqueous carbon-containing unshaped refractory of the present invention has considerably increased corrosion resistance.

### (Examples 9 to 13 and Comparative Examples 7 to 11)

Next, corresponding to the third aspect of the present invention, components were blended in the blending ratios shown in Table 2 and the mixture was kneaded with adding water as shown in Table 2 to prepare unshaped refractories of Examples 9 to 13 and Comparative Examples 7 to 11, respectively.

Each of the resultant unshaped refractories was measured for "apparent porosity after drying," "oxidation index," and "spalling resistance." Table 2 shows the results obtained.

The "apparent porosity after drying" is the same as explained in Example 1 above.

### ·Measuring method for "oxidation index":

After drying a cast-molded sample (100 mm × 100 mm × 100 mm in shape) at 105°C for 24 hours, it was heated at 1,000°C for 5 hours in an oxidative atmosphere. After the heating was completed, the sample was cut and the thickness of the oxidized layer was measured. The result was expressed as an index taking the oxidized layer of the sample of Comparative Example 1 as "100." A smaller number indicates higher oxidation resistance.

### · Measuring method for "spalling resistance"

A sample cast molded into a standard shape (230 mm × 114 mm × 65 mm) was used. After drying it at 105°C for 24 hours, the cycle of "heating at 1,500°C in an electric oven for 30 minutes - natural cooling for 30 minutes" was repeated and the number of cycles of "heating-cooling" until cracks occurred was measured. A larger number indicates higher spalling resistance.

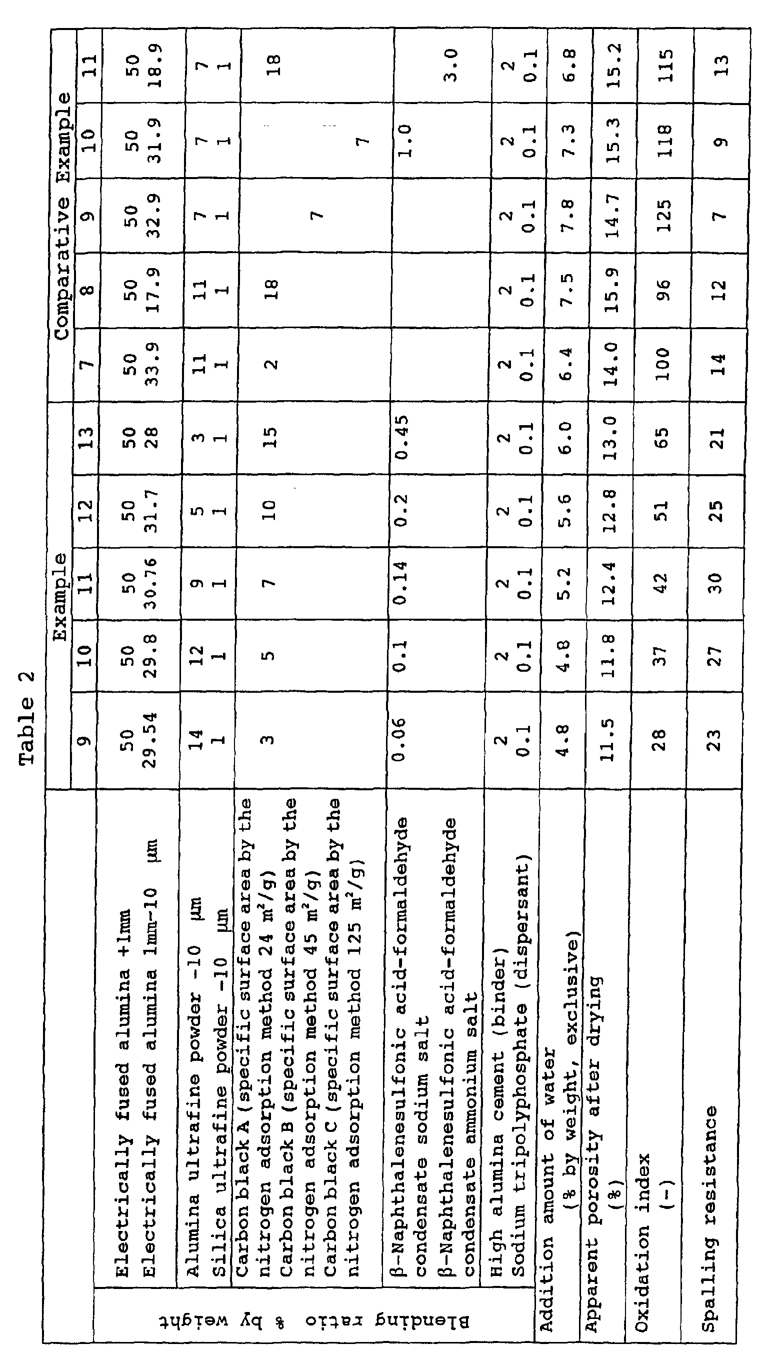

As will be apparent from Table 2, the unshaped refractories of Examples 9 to 13, which contained "Carbon black A (specific surface area by the nitrogen adsorption method 24 m²/g) as specified in the present invention in the specified content (3 to 15% by weight) as specified in the present invention exhibited an apparent porosity after drying of "13.0% or less" and were excellent in oxidation resistance and spalling resistance.

This demonstrates that use of the carbon black specified in the present invention does not reduce the fluidity of the unshaped refractory, so that carbon black can be added in large amounts, with the result that spalling resistance can be considerably increased.

On the contrary, the unshaped refractories of Comparative Example 7 (content: 2% by weight), of Comparative Example 8 (content: 18% by weight) and of Comparative Example 11 (content: 18% by weight) in which "Carbon black A" as specified in the present invention was used with the contents outside the range specified in the present invention had an apparent porosity after drying of "14% or more," so that they were inferior in both oxidation resistance and spalling resistance.

Further, the unshaped refractories of Comparative Example 9 in which "Carbon black B (specific surface area by the nitrogen adsorption method 45 m²/g)" was used and of Comparative Example 10 in which Carbon black C (specific surface area by the nitrogen adsorption method 125 m²/g) was used had an apparent porosity after drying of "14.7%, 15.3%", so that they were inferior in both oxidation resistance and spalling resistance.

### INDUSTRIAL APPLICABILITY

The aqueous carbon-containing unshaped refractory of the present invention can contain a larger amount of a carbon material than the conventional refractories. Therefore, it can fully exhibit the advantages of the carbon material when it is applied to various ovens or furnaces as a lining, so that an aqueous carbon-containing unshaped refractory having very excellent spalling resistance can be provided. Since the carbon material has excellent corrosion resistance to molten slag or the like, the present invention can provide an aqueous carbon-containing unshaped refractory that has strong resistance to melting loss.

Further, the aqueous carbon-containing unshaped refractory of the present invention can be applied not only to casting operations but also to wet spray operations using a compression pump.

## Claims

1. An aqueous carbon-containing unshaped refractory, comprising a refractory material composed of 50 to 80% by weight of refractory aggregate having a particle diameter of greater than 45 µm and 20 to 50% by weight of fine powder having a particle diameter of 45 µm or less, wherein 15 to 60% by weight of the fine powder is a carbon black material of pH 7 to 9.

2. The aqueous carbon-containing unshaped refractory according to claim 1, wherein the carbon black material contains 1.5% by weight or less of a volatile component.

3. An aqueous carbon-containing unshaped refractory, comprising 3 to 15% by weight based on the total weight of the refractory of a carbon black material having a specific surface area according to a nitrogen adsorption method of 10 to 30 m²/g.

4. The aqueous carbon-containing unshaped refractory according to claim 3, further comprising 0.02 to 0.03% by weight of β-naphthalenesulfonic acid-formaldehyde condensate sodium salt per 1% of the carbon black material.

5. The aqueous carbon-containing unshaped refractory according to claim 3 or 4, wherein ultrafine powder having a particle diameter of 10 µm or less occupies 2 to 15% by weight of the remainder of the refractory except for the carbon black material and the β-naphthalenesulfonic acid-formaldehyde condensate sodium salt.

6. The aqueous carbon-containing unshaped refractory according to any one of claims 1 to 5, wherein the refractory has an apparent porosity after drying of 13.0% or less.
